# EUROPÄISCHE PATENTSCHRIFT

(11) **EP 1 727 703 B1**
(45) Veröffentlichungstag und Bekanntmachung des Hinweises auf die Patenterteilung: **09.06.2010**
(21) Anmeldenummer: 05715078.1
(22) Anmeldetag: 07.03.2005
(51) Int. Cl.: B60N 2/02, B60N 2/44

(54) **FÜHRUNGSEINRICHTUNG ZUR FÜHRUNG EINES VERSTELLELEMENTES EINER VERSTELLEINRICHTUNG FÜR KRAFTFAHRZEUGE**
GUIDE DEVICE FOR GUIDING AN ADJUSTER ELEMENT ON AN ADJUSTER DEVICE FOR MOTOR VEHICLES
DISPOSITIF DE GUIDAGE DESTINE A GUIDER UN ELEMENT DE REGLAGE D'UN DISPOSITIF DE REGLAGE POUR VEHICULES AUTOMOBILES

(30) Priorität: 18.03.2004 DE 202004004615 U
(43) Veröffentlichungstag der Anmeldung: 06.12.2006
(73) Patentinhaber: Brose Fahrzeugteile GmbH & Co. KG, Coburg, 96450 Coburg (DE)
(72) Erfinder: FISCHER, Matthias, 96317 Kronach (DE)
(74) Vertreter: Baumgärtel, Gunnar
(86) Internationale Anmeldenummer: PCT/DE2005/000413
(87) Internationale Veröffentlichungsnummer: WO 2005/092664

(56) Entgegenhaltungen:
- DE-A1- 3 110 130
- DE-A1- 10 156 200
- DE-A1- 19 915 315
- US-A1- 2002 070 578
- US-B1- 6 733 078

## Beschreibung

Die Erfindung betrifft eine Führungseinrichtung zur Führung eines Verstellelementes einer Verstelleinrichtung für Kraftfahrzeuge nach dem Oberbegriff des Anspruchs 1, wie sie aus der US 2002/0070578 bekannt ist.

Eine derartige Führungseinrichtung umfasst eine Führungsbahn, in die das Verstellelement mit einem Führungsabschnitt eingreift, so dass es entlang der Führungsbahn bewegt werden kann, sowie Verriegelungsmittel zur Verriegelung des Führungsabschnittes in der Führungsbahn in mindestens zwei unterschiedlichen Einstellpositionen.

Eine solche Führungseinrichtung ist insbesondere bei Verstelleinrichtungen von Kraftfahrzeugsitzen verwendbar, wobei das Verstellelement durch einen schwenkbar gelagerten Verstellhebel gebildet wird, der mit einem Hebelende in einer die Führungsbahn bildenden Kulisse geführt ist. Der Verstellhebel lässt sich zur Einstellung eines Sitzteiles in unterschiedliche Winkellagen verschwenken, die jeweils einer definierten Einstellposition des in der Kulisse geführten Führungsabschnittes des Verstellhebels entsprechen. In jeder dieser Einstellpositionen lässt sich der Führungsabschnitt des Verstellhebels in der zugeordneten Kulisse verriegeln, so dass dementsprechend der Verstellhebel in einer definierten Lage festgelegt ist, die wiederum einer bestimmten Einstellung eines mit dem Verstellhebel gekoppelten Sitzteiles, wie z. B. eines zur Laderaumerweiterung mittels des Verstellhebels verschiebbaren Sitzträgers oder einer mittels des Hebels verstellbaren Rückenlehne oder einer entsprechend verstellbaren Kopfstütze, entspricht.

Der Erfindung liegt das Problem zugrunde, eine Führungseinrichtung der eingangs genannten Art zu schaffen, die mit einfachen Mitteln eine Verriegelung des Verstellelementes in unterschiedlichen Einstellpositionen ermöglicht.

Dieses Problem wird erfindungsgemäß durch die Schaffung einer Führungseinrichtung mit den Merkmalen des Anspruchs 1 gelöst.

Danach weisen die zur Verriegelung des Führungsabschnittes des Verstellelementes, z.B. eines (schwenkbar gelagerten) Verstellhebels, dienenden Verriegelungsmittel ein bewegbar gelagertes Verriegelungselement mit zwei voneinander beabstandeten Verriegelungsabschnitten auf, wobei das Verriegelungselement in eine Verriegelungsposition bringbar ist, in der es mit dem einem Verriegelungsabschnitt den Führungsabschnitt des Verstellhebels in einer ersten Einstellposition blockieren kann und mit dem anderen Verriegelungsabschnitt den Führungsabschnitt des Verstellelementes in einer zweiten Einstellposition blockieren kann, wobei das Verriegelungselement in seiner Verriegelungsposition mittels eines sekundären Verriegelungselementes arretierbar ist und das sekundäre Verriegelungselement mit dem primären Verriegelungselement über eine Kulissenführung zusammenwirkt. Dies bedeutet, dass ein einzelnes Verriegelungselement in einer definierten Verriegelungsposition den Führungsabschnitt des an der Führungseinrichtung geführten Verstellelementes sowohl dann verriegeln kann, wenn sich der Führungsabschnitt in einer ersten Einstellposition befindet, als auch dann, wenn sich der Führungsabschnitt in einer zweiten, anderen Einstellposition befindet, die von der ersten Einstellposition entlang der Führungsbahn beabstandet ist.

D. h., unabhängig davon, ob sich der Führungsabschnitt aktuell in der ersten oder der zweiten Einstellposition befindet, lässt sich dieser jeweils dadurch blockieren (und somit das Verstellelement in einer definierten Lage verriegeln), dass das eine Verriegelungselement in eine als Verriegelungsposition bezeichnete definierte Lage gebracht wird. In dieser Verriegelungsposition blockiert es den Führungsabschnitt mit einem ersten Verriegelungsabschnitt, wenn sich der Führungsabschnitt in der ersten Einstellposition befindet, und es blockiert den Führungsabschnitt mit einem zweiten Verriegelungsabschnitt, wenn sich der Führungsabschnitt in der zweiten Einstellposition befindet.

Entsprechendes gilt, wenn mehr als zwei Einstellpositionen des Führungsabschnittes und dementsprechend mehr als zwei Verriegelungsabschnitte des Verriegelungselementes vorgesehen sind.

Bevorzugt ist das Verriegelungselement zwischen einer Freigabenposition und einer Verriegelungsposition hin und her bewegbar, wobei es in seiner Freigabeposition eine Bewegung des Verstellelementes entlang der Führungsbahn ermöglicht (zulässt) und in seiner Verriegelungsposition eine Bewegung des Verstellelementes verhindert, indem dessen an der Führungsbahn geführter Führungsabschnitt durch einen zugeordneten Verriegelungsabschnitt des Verriegelungselementes in einer Einstellposition blockiert wird.

Das Verriegelungselement kann beispielsweise durch einen schwenkbar gelagerten Verriegelungshebel gebildet werden, der durch Verschwenken zwischen der Freigabeposition und der Verriegelungsposition hin und her bewegbar ist. Andererseits kann es sich hierbei auch um ein längsverschiebliches Verriegelungsteil handeln, das zwischen der Freigabeposition und der Verriegelungsposition hin und her verschiebbar ist.

Gemäß einer bevorzugten Ausführungsform der Erfindung ist das Verriegelungselement elastisch in Richtung auf seine Verriegelungsposition vorgespannt, so dass zum Erreichen der Freigabeposition das Verriegelungselement entgegen der elastischen Vorspannung aus der Verriegelungsposition heraus bewegt werden muss.

Nach einer vorteilhaften Weiterbildung der Erfindung kann das sekundäre Verriegelungselement elastisch in Richtung auf die Position vorgespannt sein, in der es das (primäre) Verriegelungselement arretiert. Hierdurch soll sichergestellt werden, dass auf das primäre Verriegelungselement einwirkende Kräfte nicht dazu führen können, dass dieses Verriegelungselement aus der Verriegelungsposition herausbewegt wird und hierdurch den in einer Einstellposition zu blockierenden Führungsabschnitt des Verstellelementes unbeabsichtigt freigibt.

Vorzugsweise ist das sekundäre Verriegelungselement hierbei derart mit dem primären Verriegelungselement gekoppelt, das durch eine Bewegung des sekundären Verriegelungselementes aus der Position heraus, in der es das primäre Verriegelungselement arretiert, zugleich das primäre Verriegelungselement aus seiner Verriegelungsposition in die Freigabeposition überführt wird. In diesem Fall dient also das sekundäre Verriegelungselement nicht nur zur Arretierung des primären Verriegelungselementes in der Verriegelungsposition, sondern gleichzeitig auch als Betätigungsmittel zur Überführung des primären Verriegelungselementes aus der Verriegelungsposition in die Freigabeposition. Hierfür kann das sekundäre Verriegelungselement manuell oder fremdkraftbetätigt, insbesondere mittels eines Elektromotors, antreibbar sein.

Die Arretierung des Verriegelungselementes in seiner Verriegelungsposition mittels eines zugeordneten sekundären Verriegelungselementes dient insbesondere als Sicherheitsverriegelung beim Auftreten von Crash-Kräften.

Unter der Wirkung der zur Erzeugung einer Vorspannung dienenden elastischen Mittel kann automatisch die erneute Einnahme der Verriegelungsposition des primären Verriegelungselementes erfolgen, sobald keine Kraft mehr auf das sekundäre Verriegelungselement wirkt, welche das primäre Verriegelungselement in der Freigabeposition hält.

Auch das sekundäre Verriegelungselement kann als ein schwenkbar gelagerter Verriegelungshebel ausgebildet sein, wobei zum Toleranzausgleich der an der Verriegelung beteiligten Teile (primäres und sekundäres Verriegelungselement, Verriegelungskulisse, Führungsbahn der Führungseinrichtung usw.) und zur spielfreien Verriegelung des Führungsabschnittes in der Führungsbahn das sekundäre Verriegelungselement mit dem primären Verriegelungselement in der Verriegelungsposition spielbehaftet (also mit Spiel) in Eingriff steht.

Alternativ oder ergänzend zu der Verwendung eines sekundären Verriegelungselementes zur Arretierung des primären Verriegelungselementes in seiner Verriegelungsposition kann das primäre Verriegelungselement derart angeordnet sein, dass zumindest in der Verriegelungsposition des primären Verriegelungselementes die an dem primären Verriegelungselement angreifenden Gewichtskräfte die Verriegelungsposition stabilisieren, also in Richtung der Verriegelungsposition und entgegen der Einnahme der Freigabeposition wirken.

Die zur Führung des Verstellelementes dienende Führungsbahn kann in einfacher Weise durch eine Führungskulisse gebildet werden, in die das Verstellelement mit einem als Führungszapfen (z. B. in Form eines Stiftes oder eines Bolzens) ausgebildeten Führungsabschnittes beweglich eingreift.

Bei den beiden Einstellpositionen, in die das Verstellelement mit seinem Führungsabschnitt bringbar ist, kann es sich beispielsweise um zwei Endpositionen der Führungsbahn bzw. Führungskulisse handeln, wobei in jeder der beiden Endpositionen der Führungsabschnitt jeweils zwischen einem seitlichen Rand der Führungskulisse und einem Verriegelungsabschnitt des Verriegelungselementes einklemmbar ist.

Ferner sind die Verriegelungsabschnitte des Verriegelungselementes bevorzugt derart gestaltet, dass der Führungsabschnitt des Verstellelementes in jeder der mindestens zwei Einstellpositionen jeweils derart auf den zugeordneten Verriegelungsabschnitt des Verriegelungselementes einwirkt, dass das Verriegelungselement die Tendenz hat, in der Verriegelungsposition zu verbleiben und den Führungsabschnitt mit einem Verriegelungsabschnitt spielfrei einzuklemmen. Hierzu kann der entsprechende Verriegelungsabschnitt beispielsweise exzenterartig ausgebildet sein. Insbesondere wirkt also der Führungsabschnitt des Verstellelementes in der jeweiligen Einstellposition nicht derart (über einen zugeordneten Verriegelungsabschnitt) auf das Verriegelungselement ein, dass dieses die Tendenz hätte, die Freigabeposition einzunehmen.

Nach einer Weiterbildung der Erfindung weist das Verriegelungselement mindestens drei Verriegelungsabschnitte auf, die zur Verriegelung des Führungsabschnittes des Verstellelementes in jeweils einer Einstellposition, also in insgesamt mindestens drei Einstellpositionen, dienen. Dabei wird mindestens einer der Verriegelungsabschnitte durch eine Aussparung des Verriegelungselementes gebildet, die sich zur spielfreien Aufnahme des Führungsabschnittes in der weiteren (dritten) Einstellposition verjüngt.

Mit Vorteil weist das Verriegelungselement zwischen seinen beiden Verriegelungsabschnitten eine (die Verriegelungsabschnitte verbindende) Anlagekontur (z. B. in Form einer Kante) auf, die sich an dem Führungsabschnitt abstützt, wenn sich das Verriegelungselement in der Freigabeposition befindet und der Führungsabschnitt von einer Einstellposition in eine andere Einstellposition bewegt wird, so dass das Verriegelungselement selbsttätig in der Freigabeposition gehalten wird. Erreicht der Führungsabschnitt die angestrebte Einstellposition, so wird das Verriegelungselement bevorzugt mittels eines elastischen Elementes selbsttätig in seine Verriegelungsposition überführt, in der es den Führungsabschnitt mit einem Verriegelungsabschnitt arretiert.

Eine Sitzverstelleinrichtung mit einer erfindungsgemäß ausgestalteten Führungseinrichtung ist durch die Merkmale des Anspruchs 28 charakterisiert.

Weitere Merkmale und Vorteile der Erfindung werden bei der nachfolgenden Beschreibung von Ausführungsbeispielen anhand der Figuren deutlich werden.

Es zeigen:
- Fig. 1a: eine detaillierte Darstellung einer ersten Ausführungsform einer Führungseinrichtung zur Anwendung in einem Kraftfahrzeugsitz, wobei der zu führende Verstellhebel in einer ersten Einstellposition verriegelt ist;
- Fig. 1b: die Führungseinrichtung aus Figur 1a bei einer Bewegung des Verstellhebels aus der ersten Einstellposition in eine zweite Einstellposition;
- Fig. 1c: die Führungseinrichtung aus Figur 1a, wobei der zu führende Verstellhebel in einer zweiten Einstellposition arretiert ist;
- Fig. 2: eine Weiterbildung der Führungseinrichtung aus den Figuren 1a bis 1c mit insgesamt drei Einstellpositionen;
- Fig. 3a: eine Abwandlung der Führungseinrichtung aus Figur 1a mit einem verschieblichen Verriegelungselement zur Verriegelung des Verstellhebels, wobei der Verstellhebel in einer ersten Einstellposition arretiert ist;
- Fig. 3b: die Führungseinrichtung aus Figur 3a bei einer Bewegung des Verstellhebels aus der ersten Einstellposition in eine zweite Einstellposition;
- Fig. 3c: die Führungseinrichtung aus Figur 3a, wobei der Verstellhebel in einer zweiten Verriegelungsposition arretiert ist;
- Fig. 4: eine weitere Abwandlung der Führungseinrichtung aus Figur 1a.

Nachfolgend werden mehrere Ausführungsbeispiele einer erfindungsgemäßen Führungseinrichtung dargestellt, die der Führung eines schwenkbar gelagerten Verstellhebels für ein Sitzteil eines Kraftfahrzeugsitzes dienen, der hierzu mit einem Führungsabschnitt in eine Führungskulisse der Führungseinrichtung eingreift. Hierdurch wird der Verstellhebel beim Verschwenken über seinen Führungsabschnitt in der zugeordneten Führungskulisse geführt, was eine definierte Schwenkbewegung des Verstellhebels und eine definierte Bewegung eines hiermit gekoppelten Sitzteiles entlang einer Verstellrichtung x zur Folge hat. Eine solche Führungseinrichtung kann beispielsweise zur Führung eines Verstellhebels dienen, der einerseits mit einer schwenkbar an einem Lehnenträger gelagerten Rückenlehne eines Kraftfahrzeugsitzes derart in Wirkverbindung steht, dass er beim Vorklappen der Rückenlehne auf die Sitzfläche des entsprechenden Kraftfahrzeugsitzes verschwenkt wird, und der andererseits derart mit dem Lehnenträger verbunden ist, dass bei dem durch Vorklappen der Rückenlehne bewirkten Verschwenken des Verstellhebels der Lehnenträger in Sitzlängsrichtung (z. B. nach vorne) bewegt wird. Hierdurch kann bei Rücksitzen in Kraftfahrzeugen bei einem Vorklappen der Rückenlehne auf die Sitzfläche zusätzlicher Stauraum nicht nur oberhalb der Rückenlehne, sondern auch hinter dem (beim Vorklappen der Rückenlehne gleichzeitig vorverlagerten) Fahrzeugsitz zur Verfügung gestellt werden.

Bei dem vorbeschriebenen Vorklappen der Rückenlehne auf die Sitzfläche und einem späteren Zurückklappen der Rückenlehne in eine aufrechte Gebrauchsposition bewegt sich der Führungsabschnitt des Verstellhebels zwischen einem ersten Ende und einem zweiten Ende der Führungskulisse der zugeordneten Führungseinrichtung. So befindet sich der Führungsabschnitt beispielsweise in der aufrechten Gebrauchsposition der Rückenlehne an einem ersten Ende der Führungskulisse und wird beim Vorklappen der Rückenlehne zu einem zweiten Ende der Führungskulisse bewegt. Bei einem späteren Wiederaufrichten der Rückenlehne erfolgt dann die Rückkehr des Führungsabschnittes zu dem ersten Ende der Führungskulisse. In jeder der beiden vorbeschriebenen Einstellpositionen (entsprechend der Anordnung des Führungsabschnittes des Verstellhebels am ersten oder zweiten Ende der Führungskulisse) lässt sich dieser jeweils derart blockieren, dass der Verstellhebel in der entsprechenden Einstellposition (entsprechend einer bestimmten Lage des mit dem Verstellhebel zu verstellenden Sitzteiles) verriegelt ist.

Die nachfolgend zu beschreibende Funktion unterschiedlicher Ausführungsformen einer erfindungsgemäßen Führungseinrichtung ist dabei unabhängig davon, ob es sich bei dem in der Führungskulisse der Führungseinrichtung geführten Verstellelement um einen Verstellhebel, wie vorstehend beispielhaft beschrieben, oder um ein sonstiges, z. B. verschiebbares, Verstellelement handelt.

Kraftfahrzeugsitze, die zur Schaffung von Stauraum einerseits in Sitzlängsrichtung verschiebbar sind und außerdem ein Vorklappen der Rückenlehne auf die Sitzfläche ermöglichen und bei denen eine erfindungsgemäße Führungseinrichtung anwendbar wäre, sind z. B. in den deutschen Patentanmeldungen 102 46 473, 103 06 626, 103 17 238 und 103 18 718 sowie der deutschen Gebrauchsmusteranmeldung 203 03 753 beschrieben.

Die erfindungsgemäße Führungseinrichtung ist darüber hinaus ganz allgemein bei Verstelleinrichtungen anwendbar, bei denen ein Verstellelement in einer Führungsbahn geführt wird und in mindestens zwei entlang der Führungsbahn voneinander beabstandeten Einstellpositionen verriegelbar sein soll.

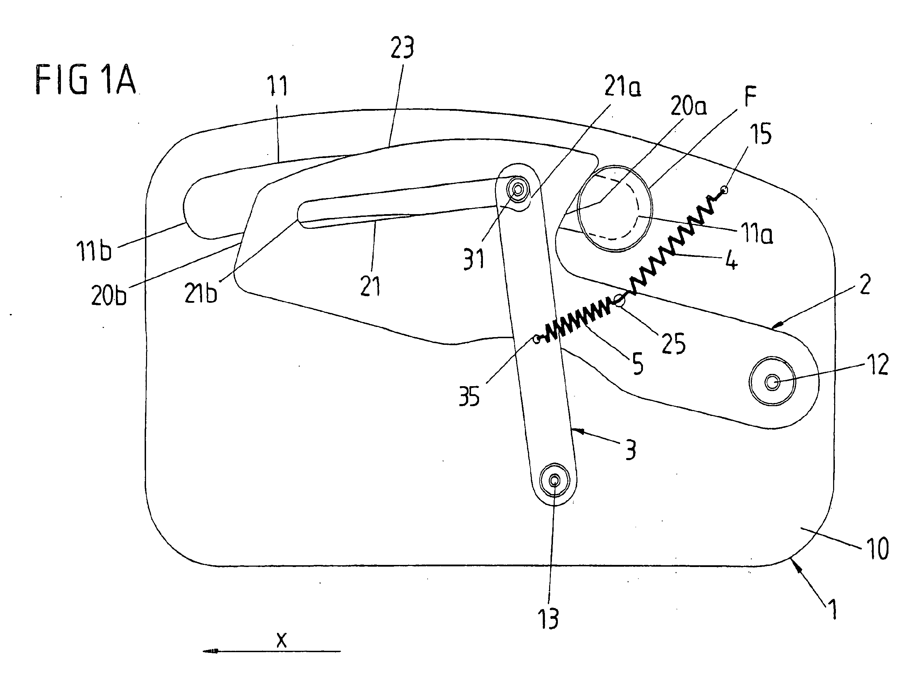

Figur 1a zeigt ein erstes Ausführungsbeispiel einer Führungseinrichtung zur Führung und Verriegelung eines Führungsabschnittes F eines Verstellhebels oder eines anderen Verstellelementes, die auf einer Basisplatte 1 angeordnet ist.

Die Basisplatte 1 weist in ihrem plattenförmigen Grundkörper 10 eine längserstreckte Führungskulisse 11 auf, in der ein nicht näher dargestellter Verstellhebel mit einem Führungsabschnitt F geführt ist, und die sich mit geringer Krümmung entlang der Fahrzeuglängsrichtung x zwischen einem ersten Ende 11a und einem zweiten Ende 11 b erstreckt, wobei die beiden Enden 11a, 11 b der Führungskulisse 11 jeweils eine Einstellposition des Führungsabschnittes F und damit des zugeordneten Verstellhebels definieren.

Zur Verriegelung des Führungsabschnittes F in jeder der beiden Einstellpositionen, also entweder im Bereich des ersten Endes 11a oder im Bereich des zweiten Endes 11 b der Führungskulisse 11, dient ein Verriegelungselement in Form eines Verriegelungshebels 2, der um eine Achse 12 verschwenkbar an der Basisplatte 1 angelenkt ist und der in seiner in Figur 1a dargestellten Verriegelungsposition derart angeordnet ist, dass ein erster Verriegelungsabschnitt 20a des Verriegelungshebels 2 dem ersten Ende 11a der Führungskulisse 11 gegenüberliegt und ein zweiter Verriegelungsabschnitt 20b des Verriegelungshebels 2 dem zweiten Ende 11 b der Führungskulisse 11 gegenüberliegt. Dabei ist zwischen dem jeweiligen Verriegelungsabschnitt 20a, 20b des Verriegelungshebels 2 und dem jeweils gegenüberliegenden Ende 11a bzw. 11 b der Führungskulisse 11 der Führungsabschnitt F eines Verstellhebels einklemmbar, so dass der Führungsabschnitt F in der jeweiligen Einstellposition blockiert und der Verriegelungshebel somit arretiert ist.

Der Verriegelungshebel 2 ist mittels eines elastischen Elementes (Rückstellmittel) in Form einer als Schraubenfeder ausgebildeten Zugfeder 4, die mit einem Ende an einer Befestigungsstelle 15 der Basisplatte 1 eingehängt ist und die mit dem anderen Ende an einer Befestigungsstelle 25 des Verriegelungshebels 2 eingehängt ist, in Richtung auf die Verriegelungsposition elastisch vorgespannt.

Unter der Wirkung der Zugfeder 4 hat der Verriegelungshebel 2 die Tendenz, stets seine Verriegelungsposition einzunehmen, in der er den Führungszapfen F am einen oder anderen Ende 11a, 11 b der Führungskulisse 11 (entsprechend jeweils einer Einstellposition des Führungsabschnittes F) blockiert. In dem in Figur 1a gezeigten Zustand ist der Führungsabschnitt F dabei in einer ersten Einstellposition blockiert, indem er zwischen dem ersten Ende 11 a der Führungskulisse 11 und dem gegenüberliegenden ersten Verriegelungsabschnitt 20a des Verriegelungshebels 2 aufgenommen und eingeklemmt ist.

Der Verriegelungshebel 2 ist dabei mittels eines weiteren, um eine Schwenkachse 13 verschwenkbar an der Basisplatte 1 angelenkten und über eine Kulissenführung 21, 31 mit dem Verriegelungshebel 2 zusammenwirkenden senkundären Verriegelungshebels 3 in seiner Verriegelungsposition arretiert. Der sekundäre Verriegelungshebel 3 ist mittels eines elastischen Elementes (Rückstellmittel) in Form einer weiteren als Schraubenfeder ausgebildeten Zugfeder 5, die mit einem Ende an einer Befestigungsstelle 25 des Verriegelungshebels 2 und mit dem anderen Ende an einer Verriegelungsstelle 35 des sekundären Verriegelungshebels 3 angelenkt ist, in Richtung auf den Zustand vorgespannt, in der er den (primären) Verriegelungshebel 2 im Verriegelungszustand arretiert. Hierbei liegt der sekundäre Verriegelungshebel 3 mit einem in die Kulisse 21 des primären Verriegelungshebels 2 eingreifenden Führungselement 31 an einem Ende 21a der entsprechenden Kulisse 21 an.

Im Ergebnis ist der Führungsabschnitt F des Verstellhebels in dem in Figur 1a gezeigten Zustand in einer ersten Einstellposition arretiert und dabei in dieser Einstellposition zwischen einem Ende 11a der an der Basisplatte 1 vorgesehenen Führungskulisse 11 und einem gegenüberliegenden Verriegelungsabschnitt 20a des in seiner Verriegelungsposition befindlichen Verriegelungshebels 2 eingeklemmt und somit spiel- und klapperfrei blockiert.

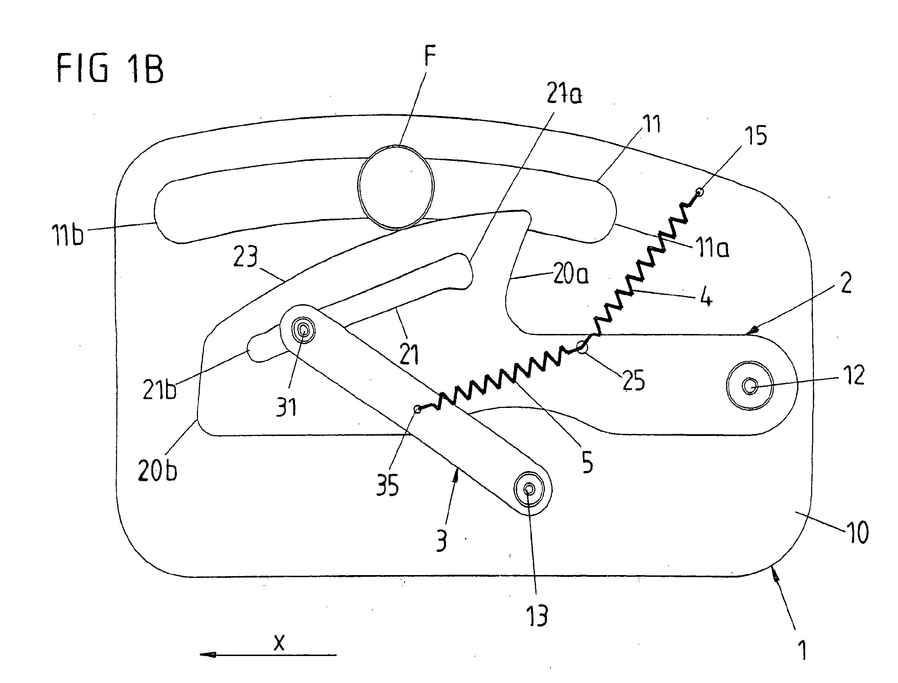

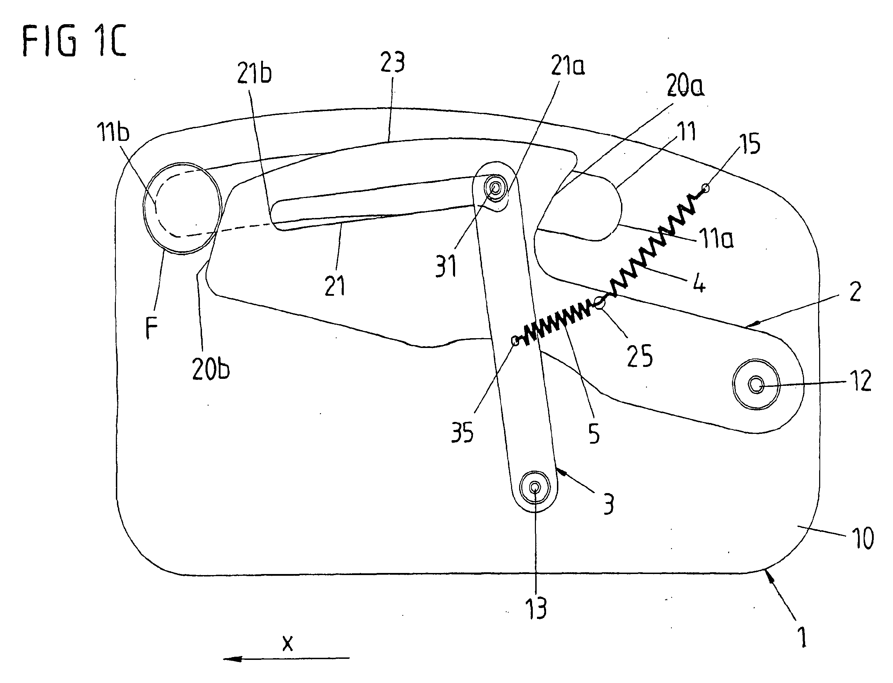

Um ein mittels des Verstellhebels verstellbares Sitzteil entlang einer Richtung x bewegen zu können, muss die Blockierung des Führungsabschnittes F des Verstellhebels gelöst werden, so dass eine Schwenkbewegung des entsprechenden Verstellhebels mit einer gleichzeitigen Bewegung von dessen Führungsabschnitt F entlang der Führungskulisse 11 zu deren anderem Ende 11 b ermöglicht wird. Dies lässt sich in einfacher Weise dadurch erreichen, dass der sekundäre Verriegelungshebel 3 (entgegen dem Uhrzeigersinn) derart um seine Schwenkachse 13 verschwenkt wird, dass sich dessen Führungselement 31 in der zugeordneten Verriegelungskulisse 21 des Verriegelungshebels 2 von dem einen Ende 21a in Richtung auf das andere Ende 21 b bewegt, und zwar entgegen der Wirkung der dem sekundären Verriegelungshebel 3 zugeordneten Zugfeder 5. Dies kann entweder manuell durch Einwirkung auf ein entsprechendes, mit dem sekundären Verriegelungshebel 3 gekoppeltes Bedienelement oder fremdkraftbetätigt durch einen mit dem sekundären Verriegelungshebel 3 zusammenwirkenden Antriebsmotor erfolgen. Durch die hiermit verbundene Einwirkung des sekundären Verriegelungshebels 3 auf den primären Verriegelungshebel 2 über das Führungselement 31 und die zugeordnete Verriegelungskulisse 21 wird der primäre Verriegelungshebel 2 (ebenfalls entgegen dem Uhrzeigersinn) derart um seine Schwenkachse 12 verschwenkt, dass er mit dem Führungsabschnitt F außer Eingriff gerät und die an der Basisplatte 1 vorgesehene Führungskulisse 11 für eine Bewegung des Führungsabschnittes F freigibt, vergleiche Figur 1 b. Der Führungsabschnitt F kann dann entlang der zugeordneten Führungskulisse 11 (ggf. entlang einer oberen Kante 23 des Verriegelungshebels 2 gleitend) von dem ersten Ende 11 a in Richtung auf das zweite Ende 11 b bewegt werden, was eine entsprechende Schwenkbewegung des zugeordneten Verstellhebels ermöglicht. Hierdurch wird das mit dem Verstellhabel gekoppelte Sitzteil in der vorbeschriebenen Weise entlang einer Richtung x bewegt.

Beim Erreichen der zweiten Einstellposition, entsprechend einer Anlage des Führungsabschnittes F des entsprechenden Verstellhebels an dem vorderen, zweiten Ende 11 b der Führungskulisse 11, kann der Verriegelungshebel 2 unter der Wirkung der zugeordneten Rückstellmittel in Form einer Zugfeder 4 in die in Figur 1c dargestellte Verriegelungsposition zurückkehren, wobei dann der Führungsabschnitt F zwischen dem vorderen Ende 11 b der Führungskulisse 11 und dem zugeordneten, gegenüberliegenden Verriegelungsabschnitt 20b des Verriegelungshebels 2 aufgenommen und so in der entsprechenden Einstellposition blockiert ist. Hierzu ist es lediglich erforderlich, den sekundären Verriegelungshebel 3 freizugeben, so dass dieser nicht mehr einer Rückkehr des primären Verriegelungshebels 2 in die Verriegelungsposition entgegensteht und die auf den primären Verriegelungshebel 2 einwirkende Zugfeder 4 die beschriebene Rückkehr des Verriegelungshebels 2 in die Verriegelungsposition bewirken kann.

Gleichzeitig wird auch der sekundäre Verriegelungshebel 3 unter der Wirkung der zugeordneten Rückstellmittel in Form einer Zugfeder 5 wieder in den Zustand überführt, in dem er den primären Verriegelungshebel 2 in seiner Verriegelungsposition arretiert. Hierzu bewegt sich der sekundäre Verriegelungshebel 3 unter der Wirkung der zugeordneten Druckfeder 5 in der am primären Verriegelungshebel 2 vorgesehenen Kulisse 21 mit dem dort eingreifenden Führungselement 31 in Richtung auf deren erstes Ende 21a, wo das Führungselement 31 als Anschlag wirkt, der ein Verschwenken des primären Verriegelungshebels 2 aus der Verriegelungsposition heraus verhindert.

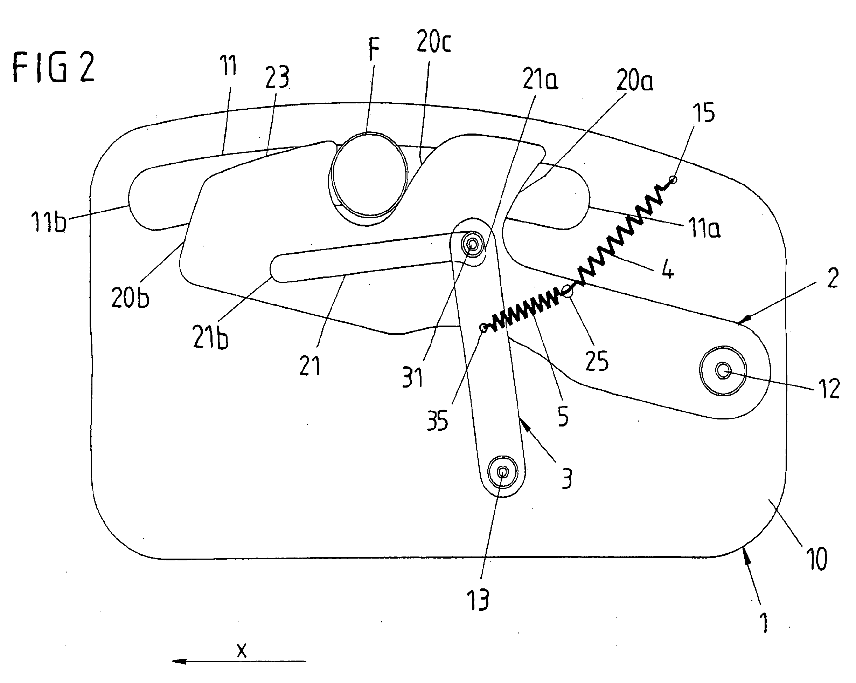

Im Ergebnis wird anhand der Figuren 2a bis 2c deutlich, dass mit nur einem Verriegelungselement in Form eines Verriegelungshebels 2 der Führungsabschnitt F und damit auch der mit dem Führungsabschnitt verbundene Verstellhebel in zwei unterschiedlichen Einstellpositionen verriegelt werden kann, wobei in jeder der beiden Einstellpositionen einer von zwei seitlichen Verriegelungsabschnitten 20a, 20b des Verriegelungshebels 2 den Führungsabschnitt F in der Führungskulisse 11 der Basisplatte 1 in seiner jeweiligen Einstellposition blockiert. Dies wird mittels nur eines einzigen Verriegelungselementes in Form eines Verriegelungshebels 2 erreicht, der zwischen einer Freigabeposition und einer Verriegelungsposition hin und her bewegbar ist und dabei in Richtung auf die Verriegelungsposition elastisch vorgespannt und in dieser mittels eines sekundären Verriegelungshebels 3 arretierbar ist.

Figur 2 zeigt eine Weiterbildung aus den Figuren 2a bis 2b, wobei der Unterschied darin besteht, dass der Verriegelungshebel 2 zwischen den beiden Verriegelungsabschnitten 20a, 20b eine als dritter Verriegelungsabschnitt 20c dienende Aussparung aufweist, in die der Führungsabschnitt F eines Verstellhebels eingreifen kann, wenn er sich im mittleren Bereich der zugeordneten Führungskulisse 11 zwischen deren beiden Enden 11a, 11b befindet und der Verriegelungshebel 2 in der Verriegelungsposition angeordnet ist, wie in Figur 2 dargestellt. Dies ermöglicht eine Verriegelung des Führungsabschnittes F und damit des zugeordneten Verriegelungshebels in einer dritten Einstellposition, die zwischen den beiden durch die Enden 11a, 11b der Führungskulisse 11 definierten Einstellpositionen liegt.

Dabei sind für alle Einstellpositionen die Kanten der Verriegelungsabschnitte 20a, 20b, 20c, an denen der Führungsabschnitt F jeweils anliegt und die somit als Anschläge zur Blockierung des Führungsabschnittes F in der jeweiligen Einstellposition wirken, räumlich derart ausgerichtet, dass die Einwirkung des Führungsabschnittes F auf den jeweiligen Verriegelungsabschnitt 20a, 20b oder 20c entlang der Erstreckungsrichtung der Führungskulisse 11 nicht die Tendenz hat, den Verriegelungshebel 2 aus seiner Verriegelungsposition heraus in die Freigabeposition zu verschwenken. Mit anderen Worten ausgedrückt, wirkt der Führungsabschnitt F in der jeweiligen Einstellposition derart auf den jeweils zugeordneten Verriegelungsabschnitt 20a, 20b oder 20c des Verriegelungshebels 2 ein, dass dieser die Tendenz hat, in der Verriegelungsposition zu verbleiben (selbsthaltende Verriegelung).

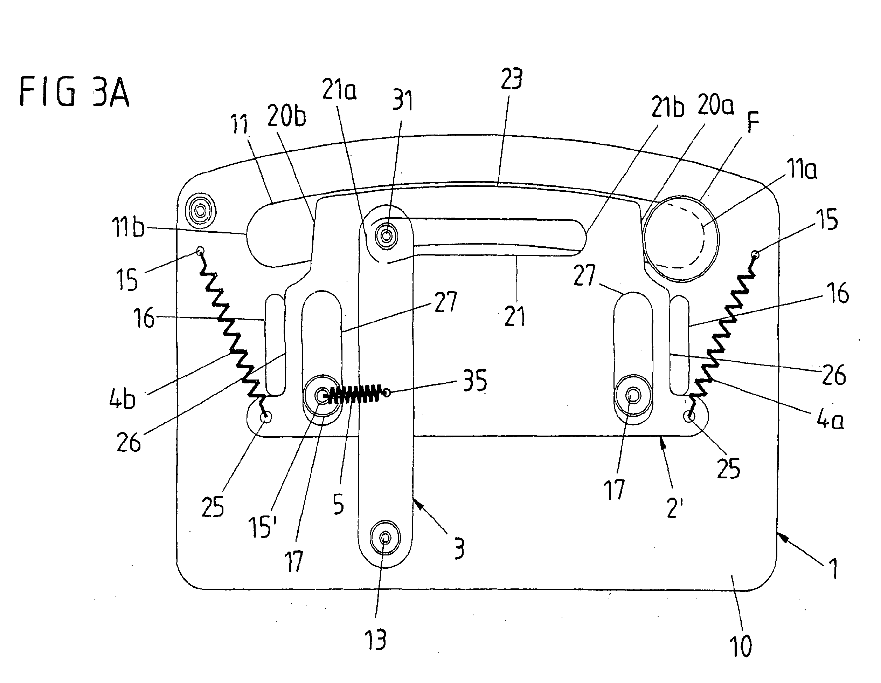

Figur 3a zeigt eine Abwandlung der Anordnung aus Figur 1a, wobei der wesentliche Unterschied darin besteht, dass zur Verriegelung des Führungsabschnittes F in einer im Grundkörper 10 einer Basisplatte 1 vorgesehenen Kulisse 11 ein Verriegelungselement in Form eines verschiebbaren Verriegelungsteiles 2' dient (anstelle eines Verriegelungshebels).

Das längsverschiebliche Verriegelungsteil 2' ist mittels an der Basisplatte 1 vorgesehener Führungsstege 16 und Führungszapfen 17 sowie mittels zugeordneter Führungsflächen 26 und Langlöcher 27 des verschieblichen Verriegelungsteiles 2' längsverschieblich und kippsicher am Grundkörper 10 der Basisplatte 1 geführt. Dabei ist es durch elastische Mittel in Form zweier als Schraubenfedern ausgebildeter Zugfedern 4a, 4b, die jeweils mit einem Ende an einer Befestigungsstelle 15 der Basisplatte 1 und mit dem anderen Ende an einer Befestigungsstelle 25 des Verriegelungsteiles 2' eingehängt sind, in Richtung auf eine Verriegelungsposition vorgespannt. In dieser Verriegelungsposition liegen zwei seitliche Verriegelungsabschnitte 20a, 20b des Verriegelungsteiles 2' jeweils derart einem Ende 11a bzw. 11b der in der Basisplatte 1 vorgesehenen Führungskulisse 11 gegenüber, dass dort jeweils der Führungsabschnitt F aufgenommen und durch Einklemmen spiel- und klapperfrei blockiert werden kann.

Dabei zeigt Figur 3a die Führungseinrichtung in einem Zustand, in dem der Führungsabschnitt F zwischen einem ersten Ende 11a der Führungskulisse 11 und einem gegenüberliegenden ersten Verriegelungsabschnitt 20a des Verriegelungsteiles 2' aufgenommen ist, so dass der zugehörige Verstellhebel in der entsprechenden Einstellposition verriegelt ist.

Auch hier ist dem durch das längsverschiebliche Verriegelungsteil 2' gebildeten primären Verriegelungselement ein sekundäres Verriegelungselement in Form eines um eine an der Basisplatte 1 vorgesehene Achse 13 verschwenkbaren sekundären Verriegelungshebels 3 zugeordnet, der mit einem der Schwenkachse 13 gegenüberliegenden Führungselement 31 in einer Verriegelungskulisse 21 des Verriegelungsteiles 2' geführt ist. Der sekundäre Verriegelungshebel 3 ist durch elastische Mittel in Form einer als Schraubenfeder ausgebildeten Zugfeder 5, die einerseits an einem basisplattenfesten Befestigungspunkt 15' und andererseits an einem am sekundären Verriegelungshebel 3 vorgesehenen Befestigungspunkt 35 eingehängt ist, in Richtung auf einen Zustand vorgespannt, in dem er das längsverschiebliche Verriegelungsteil 2' in seiner Verriegelungsposition arretiert. Hierbei liegt das Führungselement 31 des sekundären Verriegelungshebels 3 an einem Ende 21a der im längsverschieblichen Verriegelungsteil 2' vorgesehenen Kulisse 21 an und wirkt dort als ein Anschlag, der eine Bewegung des Führungsteiles 2' aus der Verriegelungsposition heraus verhindert.

Um den Führungsabschnitt F aus der in Figur 3a gezeigten Einstellposition heraus, in der er am ersten Ende 11a der zugeordneten Führungskulisse 11 angeordnet ist, in die zweite Einstellposition neben dem zweiten Ende 11 b der Führungskulisse 11 bewegen zu können, muss der sekundäre Verriegelungshebel 3 entgegen der Wirkung der zugeordneten Rückstellmittel (Zugfeder 5) derart (im Uhrzeigersinn) verschwenkt werden, dass sich dessen Führungselement 31 in Richtung auf das andere Ende 21 b der im längsverschieblichen Verstellteil 2' vorgesehenen, langlochartigen Verriegelungskulisse 21 bewegt. Hierzu ist der sekundäre Verriegelungshebel 3 mit einer zugeordneten Betätigungseinrichtung, z. B. in Form eines manuellen Bedienelementes oder in Form eines fremdkraftbetätigten Antriebs, gekoppelt.

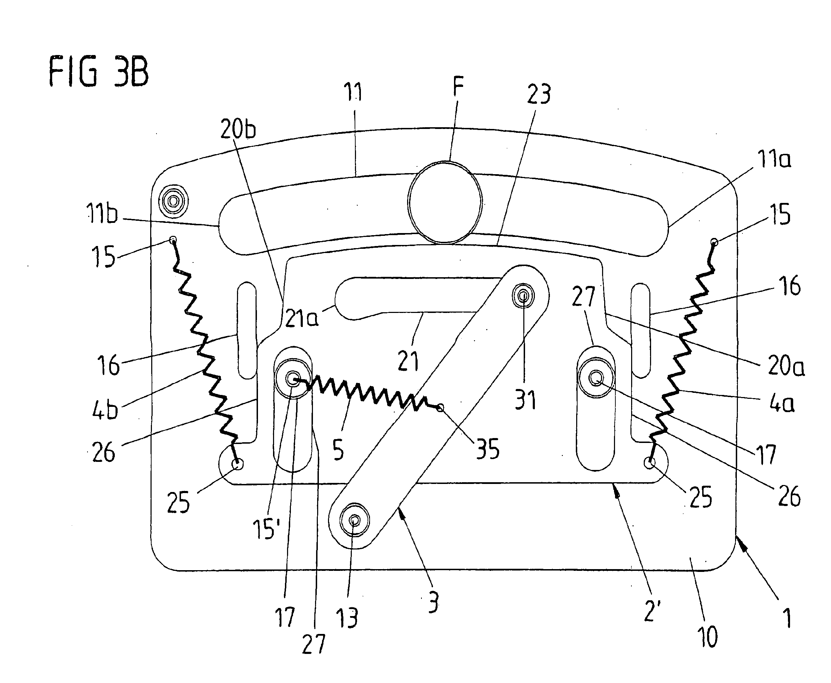

Durch das Verschwenken des sekundären Verriegelungshebels 3, der somit zugleich als Betätigungseinrichtung dient, wird das längsverschiebliche Verriegelungsteil 2', wie in Figur 3b dargestellt, derart verschoben, dass es die in der Basisplatte 1 vorgesehene Führungskulisse 11 nicht mehr überdeckt. Der Führungsabschnitt F kann dann vom einen Ende 11 a der Führungskulisse 11 in Richtung auf deren anderes Ende 11 b bewegt werden, wobei er entlang einer oberen Kante 23 des längsverschieblichen Verriegelungsteiles 2' gleiten kann.

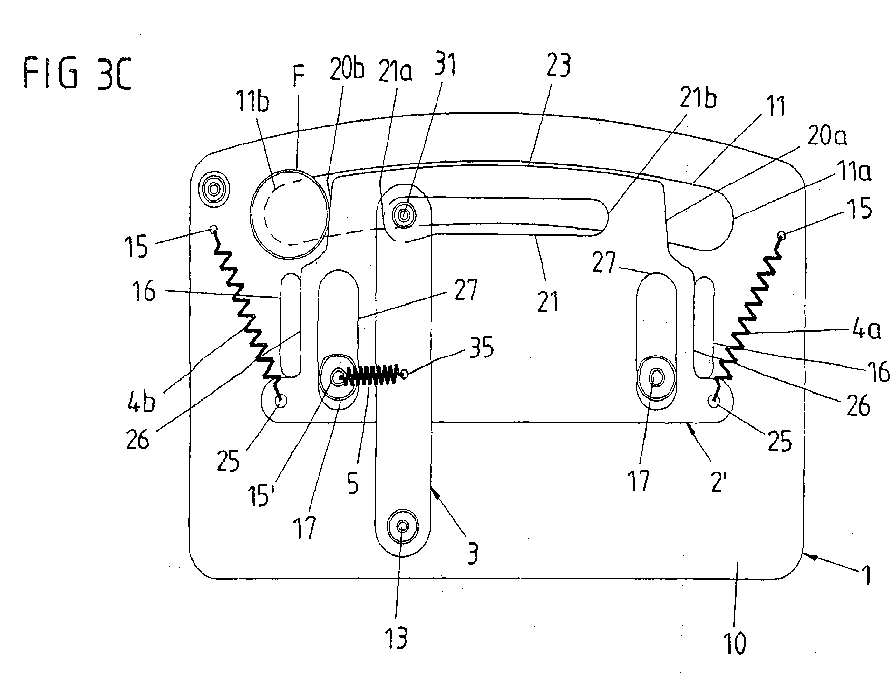

Nach dem Erreichen des zweiten Endes 11 b der Führungskulisse 11, entsprechend der zweiten Einstellposition des zugeordneten Verstellhebels, kann der Führungsabschnitt F dann in der neu erreichten Lage ohne weiteres dadurch verriegelt werden, dass die Betätigung des sekundären Verriegelungshebels 3 aufgehoben wird. Unter der Wirkung der zugeordneten als Rückstellmittel wirkenden Zugfedern 4 bzw. 5 kehren dann gemäß Figur 3c das längsverschiebliche Verriegelungsteil 2' sowie der sekundäre Verriegelungshebel 3 jeweils in die Position zurück, in der sie eine Verriegelung des Führungsabschnittes F in der zweiten Einstellposition bewirken und zugleich eine Arretierung des längsverschieblichen Verriegelungsteiles 2' in der entsprechenden Verriegelungsposition.

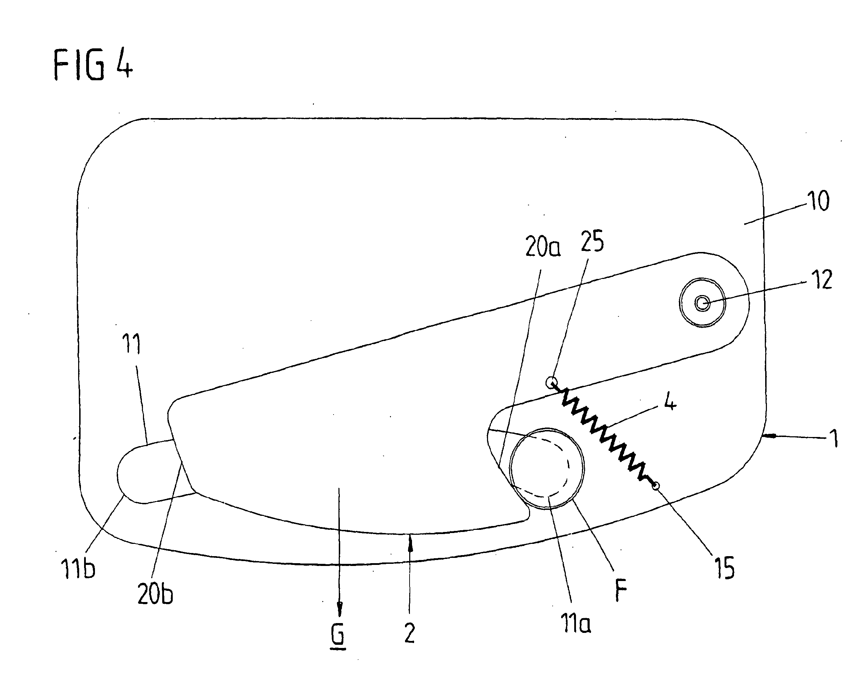

Figur 4 zeigt eine weitere Abwandlung der Anordnung aus den Figuren 2a bis 2b, wobei der wesentliche Unterschied darin besteht, dass der Verriegelungshebel 2 in seiner in Figur 4 dargestellten Verriegelungsposition, in der er den Führungsabschnitt F mit dem einen oder anderen Verriegelungsabschnitt 20a, 20b in der jeweiligen Einstellposition arretieren kann, zusätzlich zu der elastischen Vorspannung einer Rückstellfeder 4 auch mittels Gravitationskräften G gehalten wird. Mit anderen Worten ausgedrückt, ist der Verriegelungshebel 2 bei diesem Ausführungsbeispiel so angeordnet, dass in der Verriegelungsposition die am Verriegelungshebel 2 angreifenden Gravitationskräfte G in Richtung auf eine Beibehaltung der Verriegelungsposition einwirken. Bei einem hinreichend großen Gewicht des Verriegelungshebels 2 kann in diesem Fall auf ein zusätzliches sekundäres Verriegelungselement zur Arretierung des Verriegelungshebels 2 in seiner Verriegelungsposition verzichtet werden.

## Patentansprüche

1. Führungseinrichtung zur Führung eines Verstellelementes einer Verstelleinrichtung für Kraftfahrzeuge mit
- einer Führungsbahn, entlang der das Verstellelement bewegbar ist,
- einem Führungsabschnitt (F) des Verstellelementes, über den das Verstellelement in der Führungsbahn geführt ist, und
- Verriegelungsmitteln zur Verriegelung des Führungsabschnittes (F) in der Führungsbahn in mindestens zwei voneinander beabstandeten Einstellpositionen,
wobei die Verriegelungsmittel ein bewegbar gelagertes Verriegelungselement (2, 2') mit mindestens zwei voneinander beabstandeten Verriegelungsabschnitten (20a, 20b, 20c) umfassen und dass das Verriegelungselement (2, 2') in eine Verriegelungsposition bringbar ist, in der es mit einem Verriegelungsabschnitt (20a) den Führungsabschnitt (F) in einer ersten Einstellposition blockieren kann und mit dem anderen Verriegelungsabschnitt (20b) den Führungsabschnitt (F) in einer zweiten Einstellposition blockieren kann, **dadurch gekennzeichnet dass** dem Verriegelungselement (2, 2') ein sekundäres Verriegelungselement (3) zugeordnet ist, mit dem das Verriegelungselement (2, 2') in der Verriegelungsposition arretierbar ist und das sekundäre Verriegelungselement (3) mit dem Verriegelungselement (2, 2') über eine Kulissenführung (21, 31) zusammenwirkt.

2. Führungseinrichtung nach Anspruch 1, **dadurch gekennzeichnet, dass** das Verriegelungselement (2, 2') zwischen einer Freigabeposition und einer Verriegelungsposition hin und her bewegbar ist, wobei es in der Freigabeposition eine Bewegung des Führungsabschnittes (F) in der Führungsbahn (11) zulässt und in der Verriegelungsposition den Führungsabschnitt (F) in der Führungsbahn (11) in seiner jeweiligen Einstellposition blockiert.

3. Führungseinrichtung nach Anspruch 1 oder 2, **dadurch gekennzeichnet, dass** das Verriegelungselement (2) durch einen schwenkbar gelagerten Verriegelungshebel gebildet wird.

4. Führungseinrichtung nach Anspruch 1 oder 2, **dadurch gekennzeichnet, dass** das Verriegelungselement (2') durch ein längsverschieblich gelagertes Verriegelungsteil gebildet wird.

5. Führungseinrichtung nach einem der vorhergehenden Ansprüche, **dadurch gekennzeichnet, dass** das Verriegelungselement (2, 2') elastisch in Richtung auf die Verriegelungsposition vorgespannt ist.

6. Führungseinrichtung nach Anspruch 2 und 5, **dadurch gekennzeichnet, dass** das Verriegelungselement (2) entgegen der Wirkung der elastischen Vorspannung in die Freigabeposition bringbar ist.

7. Führungseinrichtung nach einem der vorhergehenden Ansprüche , **dadurch gekennzeichnet, dass** das sekundäre Verriegelungselement (3) elastisch in Richtung auf eine Position vorgespannt ist, in der es das Verriegelungselement (2, 2') in der Verriegelungsposition arretiert.

8. Führungseinrichtung nach einem der vorhergehenden Ansprüche, **dadurch gekennzeichnet, dass** das sekundäre Verriegelungselement (3) entgegen der elastischen Vorspannung aus der Position herausbewegbar ist, in der es das Verriegelungselement (2, 2') in der Verriegelungsposition arretiert.

9. Führungseinrichtung nach einem der einem der vorhergehenden Ansprüche , **dadurch gekennzeichnet, dass** das sekundäre Verriegelungselement (3) derart mit dem Verriegelungselement (2, 2') gekoppelt ist, dass durch Bewegung des sekundären Verriegelungselementes (3) aus der Position heraus, in der es das Verriegelungselement (2, 2') arretiert, das Verriegelungselement (2, 2') in die Freigabeposition gebracht wird.

10. Führungseinrichtung nach einem der vorhergehenden Ansprüche, **dadurch gekennzeichnet, dass** zum Toleranzausgleich bei den an der Verriegelung des Führungsabschnittes (F) beteiligten Baugruppen (2, 2', 3, 21, 31) und zur spielfreien Verriegelung des Führungsabschnittes (F) das sekundäre Verriegelungselement (3) mit dem Verriegelungselement (2, 2') in der Verriegelungsposition spielbehaftet in Eingriff steht.

11. Führungseinrichtung nach einem der einem der vorhergehenden Ansprüche, **dadurch gekennzeichnet, dass** das sekundäre Verriegelungselement (3) durch einen schwenkbar gelagerten Verriegelungshebel gebildet wird.

12. Führungseinrichtung nach einem der vorhergehenden Ansprüche, **dadurch gekennzeichnet, dass** das Verriegelungselement (2) derart angeordnet ist, dass zumindest in der Verriegelungsposition die am Verriegelungselement (2) angreifende Gewichtskraft (G) in Richtung auf eine Beibehaltung der Verriegelungsposition wirkt.

13. Führungseinrichtung nach einem der vorhergehenden Ansprüche, **dadurch gekennzeichnet, dass** die Führungsbahn (11) durch eine Führungskulisse gebildet wird.

14. Führungseinrichtung nach Anspruch 13, **dadurch gekennzeichnet, dass** der Führungsabschnitt (F) des Verstellelementes durch einen in die Führungskulisse (11) eingreifenden Führungszapfen gebildet wird.

15. Führungseinrichtung nach einem der vorhergehenden Ansprüche, **dadurch gekennzeichnet, dass** die beiden Einstellpositionen durch zwei Endlagen des Führungsabschnittes (F) in der Führungsbahn (11) gebildet werden.

16. Führungseinrichtung nach Anspruch 13 und 15, **dadurch gekennzeichnet, dass** in jeder der beiden Einstellpositionen der Führungsabschnitt (F) zwischen einem seitlichen Rand (11a, 11 b) der Führungskulisse (11) und einem Verriegelungsabschnitt (20a, 20b) des Verriegelungselementes (2, 2') eingeklemmt ist.

17. Führungseinrichtung nach einem der vorhergehenden Ansprüche, **dadurch gekennzeichnet, dass** der Führungsabschnitt (F) in jeder der Einstellpositionen jeweils derart auf den zugeordneten Verriegelungsabschnitt (20a, 20b, 20c) des Verriegelungselementes (2, 2') einwirkt, dass das Verriegelungselement (2, 2') die Tendenz hat, in der Verriegelungsposition zu verbleiben.

18. Führungseinrichtung nach Anspruch 16 oder 17, **dadurch gekennzeichnet, dass** der Verriegelungsabschnitt (20a, 20b, 20c) als Exzenter ausgebildet ist.

19. Führungseinrichtung nach einem der vorhergehenden Ansprüche, **dadurch gekennzeichnet, dass** zwei Verriegelungsabschnitte (20a, 20b) des Verriegelungselementes (2, 2') durch seitliche Endabschnitte des Verriegelungselementes (2, 2') gebildet werden.

20. Führungseinrichtung nach einem der vorhergehenden Ansprüche, **dadurch gekennzeichnet, dass** das Verriegelungselement (2) mindestens drei Verriegelungsabschnitte (20a, 20b, 20c) aufweist, die zur Verriegelung des Führungsabschnittes (F) des Verstellelementes in jeweils einer Einstellposition dienen.

21. Führungseinrichtung nach Anspruch 20, **dadurch gekennzeichnet, dass** mindestens ein Verriegelungsabschnitt (20c) durch eine Aussparung des Verriegelungselementes (2) gebildet wird.

22. Führungseinrichtung nach Anspruch 21, **dadurch gekennzeichnet, dass** die den Verriegelungsabschnitt (20c) bildende Aussparung zur spielfreien Aufnahme des Führungsabschnittes (F) einen sich verjüngenden Bereich aufweist.

23. Führungseinrichtung nach einem der Ansprüche 20 bis 22; **dadurch gekennzeichnet, dass** eine Einstellposition einer Lage des Führungsabschnittes (F) zwischen den beiden Enden (11 a, 11 b) der Führungsbahn (11) entspricht.

24. Führungseinrichtung nach einem der vorhergehenden Ansprüche, **dadurch gekennzeichnet, dass** das Verriegelungselement (2, 2') eine Anlagekontur (23) aufweist, die sich während einer Bewegung des Führungsabschnittes (F) in der Führungsbahn (11) zwischen zwei Einstellpositionen gleitend am Führungsabschnitt (F) abstützt, so dass das Verriegelungselement (2, 2') in einer Freigabeposition gehalten wird, in der es den Führungsabschnitt (F) nicht blockiert.

25. Führungseinrichtung nach Anspruch 24, **dadurch gekennzeichnet, dass** das Verriegelungselement (2, 2') den Führungsabschnitt (F) beim Erreichen einer der Einstellpositionen unter der Wirkung mindestens eines elastischen Elementes selbsttätig arretiert.

26. Führungseinrichtung nach einem der vorhergehenden Ansprüche, **dadurch gekennzeichnet, dass** sie zur Führung eines Verstellelementes einer Verstelleinrichtung für Kraftfahrzeugsitze dient.

27. Führungseinrichtung nach Anspruch 26, **dadurch gekennzeichnet, dass** die Verstelleinrichtung zur Verstellung eines Sitzträgers, einer Lehne oder einer Kopfstütze eines Kraftfahrzeugsitzes dient.

28. Sitzverstelleinrichtung für Kraftfahrzeuge mit einem zu verstellenden Sitzteil und einem Verstellelement zur Einstellung der Lage des Sitzteiles,
**gekennzeichnet durch**
eine Führungseinrichtung nach einem der vorhergehenden Ansprüche, mittels der das Verstellelement geführt ist.

## Claims

1. A guide device for guiding an adjuster element on an adjuster device for motor vehicles, comprising
- a guide track, along which the adjuster element can be moved,
- a guide section (F) of the adjuster element, via which the adjuster element is guided in the guide track, and
- locking means for locking the guide section (F) in the guide track in at least two mutually spaced adjustment positions,
wherein the locking means comprise a movably mounted locking element (2, 2') having at least two mutually spaced locking sections (20a, 20b, 20c), and in that the locking element (2, 2') can be brought into a locking position in which it, with one locking section (20a), can block the guide section (F) in a first adjustment position and, with the other locking section (20b), can block the guide section (F) in a second adjustment position, **characterized in that** to the locking element (2, 2') there is assigned a secondary locking element (3), with which the locking element (2, 2') can be detained in the locking position, and the secondary locking element (3) cooperates with the locking element (2, 2') via a link guide (21, 31).

2. The guide device as claimed in claim 1, **characterized in that** the locking element (2, 2') can be moved to and fro between a release position and a locking position, wherein, in the release position, it permits a movement of the guide section (F) in the guide track (11) and, in the locking position, blocks the guide section (F) in the guide track (11) in its respective adjustment position.

3. The guide device as claimed in claim 1 or 2, **characterized in that** the locking element (2) is formed by a pivotably mounted locking lever.

4. The guide device as claimed in claim 1 or 2, **characterized in that** the locking element (2') is formed by a locking part which is mounted in a longitudinally displaceable manner.

5. The guide device as claimed in one of the preceding claims, **characterized in that** the locking element (2, 2') is elastically pretensioned in the direction of the locking position.

6. The guide device as claimed in claim 2 and 5, **characterized in that** the locking element (2) can be brought into the release position counter to the action of the elastic pretensioning.

7. The guide device as claimed in one of the preceding claims, **characterized in that** the secondary locking element (3) is elastically pretensioned in the direction of a position in which it detains the locking element (2, 2') in the locking position.

8. The guide device as claimed in one of the preceding claims, **characterized in that** the secondary locking element can be moved counter to the elastic pretensioning out of the position in which it detains the locking element (2, 2') in the locking position.

9. The guide device as claimed in one of the preceding claims, **characterized in that** the secondary locking element (3) is coupled to the locking element (2, 2') in such a way that, through movement of the secondary locking element (3) out of the position in which it detains the locking element (2, 2'), the locking element (2, 2') is brought into the release position.

10. The guide device as claimed in one of the preceding claims, **characterized in that**, for the tolerance equalization with respect to the subassemblies (2, 2', 3, 21, 31) involved in the locking of the guide section (F) and for the play-free locking of the guide section (F), the secondary locking element (3) is engaged with the locking element (2, 2') in the locking position in a play-bound manner.

11. The guide device as claimed in one of the preceding claims, **characterized in that** the secondary locking element (3) is formed by a pivotably mounted locking lever.

12. The guide device as claimed in one of the preceding claims, **characterized in that** the locking element (2) is arranged in such a way that, at least in the locking position, the weight force (G) acting upon the locking (2) acts in the direction of a maintenance of the locking position.

13. The guide device as claimed in one of the preceding claims, **characterized in that** the guide track (11) is formed by a guide link.

14. The guide device as claimed in claim 13,
**characterized in that** the guide section (F) of the adjuster element is formed by a guide pin which engages in the guide link (11).

15. The guide device as claimed in one of the preceding claims, **characterized in that** the two adjustment positions are formed by two end positions of the guide section (F) in the guide track (11).

16. The guide device as claimed in claim 13 and 15, **characterized in that** in each of the two adjustment positions the guide section (F) is clamped between a lateral rim (11a, 11b) of the guide link (11) and a locking section (20a, 20b) of the locking element (2, 2').

17. The guide device as claimed in one of the preceding claims, **characterized in that** the guide section (F), in each of the adjustment positions, respectively acts upon the assigned locking section (20a, 20b, 20c) of the locking element (2, 2') in such a way that the locking element (2, 2') tends to remain in the locking position.

18. The guide device as claimed in claim 16 or 17, **characterized in that** the locking section (20a, 20b, 20c) is configured as an eccentric.

19. The guide device as claimed in one of the preceding claims, **characterized in that** two locking sections (20a, 20b) of the locking element (2, 2') are formed by lateral end sections of the locking element (2, 2').

20. The guide device as claimed in one of the preceding claims, **characterized in that** the locking element (2) has at least three locking sections (20a, 20b, 20c), which serve to lock the guide section (F) of the adjuster element in a respective adjustment position.

21. The guide device as claimed in claim 20, **characterized in that** at least one locking section (20c) is formed by a recess in the locking element (2).

22. The guide device as claimed in claim 21, **characterized in that** the recess forming the locking section (20c) has a tapered region for the play-free reception of the guide section (F).

23. The guide device as claimed in one of claims 20 to 22, **characterized in that** one adjustment position corresponds to a position of the guide section (F) between the two ends (11a, 11b) of the guide track (11).

24. The guide device as claimed in one of the preceding claims, **characterized in that** the locking element (2, 2') has a contact contour (23), which, during movement of the guide section (F) in the guide track (11) between two adjustment positions, is supported in sliding arrangement against the guide section (F), so that the locking element (2, 2') is held in a release position in which it does not block the guide section (F).

25. The guide device as claimed in claim 24, **characterized in that** the locking element (2, 2') automatically detains the guide section (F), under the action of at least one elastic element, when one of the adjustment positions is reached.

26. The guide device as claimed in one of the preceding claims, **characterized in that** it serves to guide an adjuster element of an adjuster device for motor vehicle seats.

27. The guide device as claimed in claim 26, **characterized in that** the adjuster device serves to adjust a seat support, a backrest or a headrest of a motor vehicle seat.

28. A seat adjuster device for motor vehicles, comprising a seat part to be adjusted and an adjuster element for adjusting the position of the seat part, **characterized by** a guide device as claimed in one of the preceding claims, by means of which the adjuster element is guided.

## Revendications

1. Dispositif de guidage pour le guidage d'un élément de réglage dans un dispositif de réglage pour véhicules automobiles, comprenant
- une voie de réglage le long de laquelle l'élément de réglage est déplaçable,
- un tronçon de réglage (F) de l'élément de réglage, sur lequel l'élément de réglage est guidé dans la voie de guidage, et
- des moyens de verrouillage pour verrouiller le tronçon de guidage (F) dans la voie de guidage dans au moins deux positions de réglage à distance l'une de l'autre,
dans lequel les moyens de verrouillage comprennent un élément de verrouillage (2, 2') monté mobile avec au moins deux tronçons de verrouillage (20a, 20b, 20c) à distance l'un de l'autre, et dans lequel l'élément de verrouillage (2, 2') peut être amené dans une position de verrouillage dans laquelle il peut bloquer par un tronçon de verrouillage (20a) le tronçon de guidage (F) dans une première position de réglage, et par l'autre le tronçon de verrouillage (20b) le tronçon de guidage (F) dans une seconde position de réglage, **caractérisé en ce qu'**un élément de verrouillage secondaire (3) est associé à l'élément de verrouillage (2, 2'), au moyen duquel l'élément de verrouillage (2, 2') peut être arrêté dans la position de verrouillage et l'élément de verrouillage secondaire (3) coopère avec l'élément de verrouillage (2, 2') via un guidage à glissière (21, 31).

2. Dispositif de guidage selon la revendication 1, **caractérisé en ce que** l'élément de verrouillage (2, 2') est déplaçable en va-et-vient entre une position de libération et une position de verrouillage, de sorte que dans la position de libération il autorise un mouvement du tronçon de guidage (F) dans la voie de guidage (11) et que, dans la position de verrouillage, il bloque le tronçon de verrouillage (F) dans la voie de guidage (11) dans sa position de réglage respective.

3. Dispositif de guidage selon la revendication 1 ou 2, **caractérisé en ce que** l'élément de verrouillage (2) est formé par un levier de verrouillage monté en pivotement.

4. Dispositif de guidage selon la revendication 1 ou 2, **caractérisé en ce que** l'élément de verrouillage (2') est formé par une pièce de verrouillage montée en déplacement longitudinal.

5. Dispositif de guidage selon l'une des revendications précédentes, **caractérisé en ce que** l'élément de verrouillage (2, 2') est précontraint élastiquement en direction de la position de verrouillage.

6. Dispositif de guidage selon les revendications 2 et 5, **caractérisé en ce que** l'élément de verrouillage (2) peut être amené dans la position de libération à l'encontre de l'action de la précontrainte élastique.

7. Dispositif de guidage selon l'une des revendications précédentes, **caractérisé en ce que** l'élément de verrouillage secondaire (3) est précontraint élastiquement en direction d'une position dans laquelle il arrête l'élément de verrouillage (2, 2') dans la position de verrouillage.

8. Dispositif de guidage selon l'une des revendications précédentes, **caractérisé en ce que** l'élément de verrouillage secondaire (3) est déplaçable à l'encontre de la précontrainte élastique hors de la position dans laquelle il arrête l'élément de verrouillage (2, 2') dans la position de verrouillage.

9. Dispositif de guidage selon l'une des revendications précédentes, **caractérisé en ce que** l'élément de verrouillage secondaire (3) est accouplé à l'élément de verrouillage (2, 2') de telle manière que par déplacement de l'élément de verrouillage (3) hors de la position dans laquelle il arrête l'élément de verrouillage (2, 2'), l'élément de verrouillage (2, 2') est amené dans la position de libération

10. Dispositif de guidage selon l'une des revendications précédentes, **caractérisé en ce que** pour la compensation des tolérances dans les groupes structurels (2, 2', 3, 21, 31) participant au verrouillage du tronçon de guidage (F) et pour le verrouillage sans jeu du tronçon de guidage (F), l'élément de verrouillage secondaire (3) engage l'élément de verrouillage (2, 2') avec jeu dans la position de verrouillage.

11. Dispositif de guidage selon l'une des revendications précédentes, **caractérisé en ce que** l'élément de verrouillage secondaire (3) est formé par un levier de verrouillage monté en pivotement.

12. Dispositif de guidage selon l'une des revendications précédentes, **caractérisé en ce que** l'élément de verrouillage (3) est agencé de telle façon qu'au moins dans la position de verrouillage la force pondérale (G) attaquant l'élément de verrouillage (2) agit dans le sens d'un maintien de la position de verrouillage.

13. Dispositif de guidage selon l'une des revendications précédentes, **caractérisé en ce que** la voie de guidage (11) est formée par une glissière de guidage.

14. Dispositif de guidage selon la revendication 13, **caractérisé en ce que** le tronçon de guidage (F) de l'élément de réglage est formé par un tenon de guidage qui s'engage dans la glissière de guidage (11).

15. Dispositif de guidage selon l'une des revendications précédentes, **caractérisé en ce que** les deux positions de réglage sont formées par deux positions finales du tronçon de guidage (F) dans la voie de guidage (11).

16. Dispositif de guidage selon la revendication 13 et 15, **caractérisé en ce que** dans chacune des deux positions de réglage le tronçon de guidage (F) est coincé entre un bord latéral (11a, 11b) de la glissière de guidage (11) et un tronçon de verrouillage (20a, 20b) de l'élément de verrouillage (2, 2').

17. Dispositif de guidage selon l'une des revendications précédentes, **caractérisé en ce que** le tronçon de guidage (F) agit, dans chacune des positions de réglage, sur le tronçon de verrouillage associé respectif (20a, 20b, 20c) de l'élément de verrouillage (2, 2') de telle manière que l'élément de verrouillage (2, 2') a tendance à demeurer dans la position de verrouillage.

18. Dispositif de guidage selon la revendication 16 ou 17, **caractérisé en ce que** le tronçon de verrouillage (20a, 20b, 20c) est réalisé sous forme d'un excentrique.

19. Dispositif de guidage selon l'une des revendications précédentes, **caractérisé en ce que** deux tronçons de verrouillage (20a, 20b) de l'élément de verrouillage (2, 2') sont formés par des tronçons terminaux latéraux de l'élément de verrouillage (2, 2').

20. Dispositif de guidage selon l'une des revendications précédentes, **caractérisé en ce que** l'élément de verrouillage (2) comprend au moins trois tronçons de verrouillage (20a, 20b, 20c) qui servent au verrouillage du tronçon de verrouillage (F) de l'élément de réglage dans une position de réglage respective.

21. Dispositif de guidage selon la revendication 20, **caractérisé en ce qu'**au moins un tronçon de verrouillage (20c) est formé par une échancrure de l'élément de verrouillage (2).

22. Dispositif de guidage selon la revendication 21, **caractérisé en ce que** l'échancrure servant de tronçon de verrouillage (20c) comprend une zone qui va en se rétrécissant pour la réception du tronçon de guidage (F) sans jeu.

23. Dispositif de guidage selon l'une des revendications 20 à 22, **caractérisé en ce qu'**une position de réglage correspond à une position du tronçon de guidage (F) entre les deux extrémités (11a, 11b) de la voie de guidage (11).

24. Dispositif de guidage selon l'une des revendications précédentes, **caractérisé en ce que** l'élément de verrouillage (2, 2') présente un contour d'appui (23) qui est soutenu pendant un mouvement du tronçon de guidage (F) dans la voie de guidage (11) entre deux positions de réglage en coulissement sur le tronçon de guidage (F) de telle sorte que l'élément de verrouillage (2, 2') est maintenu dans une position de libération dans laquelle il ne bloque pas le tronçon de guidage (F).

25. Dispositif de guidage selon la revendication 24, **caractérisé en ce que** l'élément de verrouillage (2, 2') arrête automatiquement le tronçon de guidage (F) lorsqu'il atteint l'une des positions de réglage sous l'action d'au moins un élément élastique.

26. Dispositif de guidage selon l'une des revendications précédentes, **caractérisé en ce qu'**il sert au guidage d'un élément de réglage d'un dispositif de réglage pour des sièges de véhicules.

27. Dispositif de guidage selon la revendication 26, **caractérisé en ce que** le dispositif de réglage sert au réglage d'un porte-siège, d'un dossier ou d'un appui-tête d'un siège de véhicule.

28. Dispositif de réglage de siège pour véhicules automobiles comprenant une partie de siège à régler et un élément de réglage pour régler la position de la partie de siège,
**caractérisé par** un dispositif de guidage selon l'une des revendications précédentes, au moyen duquel l'élément de réglage est guidé.
